# EUROPÄISCHE PATENTANMELDUNG

(11) **EP 2 372 174 A2**
(43) Veröffentlichungstag der Anmeldung: **05.10.2011**
(21) Anmeldenummer: 11154301.3
(22) Anmeldetag: 14.02.2011
(51) Int. Cl.: F16B 13/12, F16B 19/10

(54) **Vorrichtung und Verfahren zur Befestigung sowie Vorrichtung zur Erzeugung von Schlägen**

(30) Priorität: 22.03.2010 DE 102010003130
(71) Anmelder: HILTI Aktiengesellschaft, 9494 Schaan (LI)
(72) Erfinder: Stahel, Simon, 7000, Chur (CH); Bönig, Stefan, 88147, Achberg-Esseratsweiler (DE); Durig, Markus, 6793, Gaschurn (AT); Frommelt, Markus, 9494, Schaan (LI)

(57) **Zusammenfassung**

Vorrichtung und Verfahren zur Befestigung eines ersten Gegenstandes an einem zweiten Gegenstand. Die Vorrichtung weist eine Hülse und einen Dorn auf, wobei die Hülse ein erstes Lastangriffsmittel für den ersten Gegenstand und ein Widerlager für eine Aussenfläche des zweiten Gegenstands sowie einen Durchgang aufweist. Eine Verengung eines Durchgangs durch die Hülse erstreckt sich zumindest bis zu jener Stelle des Durchgangs, welche zu dem Widerlager am nächsten benachbart ist.

## Beschreibung

### Technisches Gebiet

Die Erfindung betrifft eine Vorrichtung und ein Verfahren zur Befestigung eines ersten Gegenstandes an einem zweiten Gegenstand sowie eine Vorrichtung zur Erzeugung von Schlägen.

### Stand der Technik

Befestigungsvorrichtungen weisen oft eine Hülse und einen Dorn auf, wobei die Hülse ein erstes Lastangriffsmittel für den ersten Gegenstand und einen Durchgang aufweist. Die Hülse wird in ein Bohrloch in dem zweiten Gegenstand eingeführt. Der Dorn ist in den Durchgang einführbar, um die Hülse in dem Bohrloch aufzuspreizen und eine Befestigungswirkung zu erreichen. Um zufriedenstellende Haltekräfte zu erreichen, ist eine Mindesteinstecktiefe der Hülse in das Bohrloch und somit eine Mindesttiefe des Bohrlochs sicherzustellen.

Insbesondere bei lackierten oder mit einer Schutzschicht versehenen Gegenständen besteht weiterhin die Gefahr einer Beschädigung des Lackes beziehungsweise der Schutzschicht.

Aufgabe der Erfindung ist es, eine Vorrichtung zur Verfügung zu stellen, mit welcher ein erster Gegenstandes an einem zweiten Gegenstand zuverlässig befestigt werden kann. Weiterhin ist es Aufgabe der Erfindung ist es, ein Verfahren zur Verfügung zu stellen, mit welchem ein erster Gegenstandes an einem zweiten Gegenstand zuverlässig befestigt werden kann. Weiterhin ist es Aufgabe der Erfindung, eine Vorrichtung zur Durchführung eines solchen Verfahrens zur Verfügung zu stellen.

### Darstellung der Erfindung

Die Aufgabe wird gelöst durch eine Vorrichtung zur Befestigung eines ersten Gegenstandes an einem zweiten Gegenstand, mit einer Hülse und einem Dorn, wobei die Hülse ein erstes Lastangriffsmittel für den ersten Gegenstand und ein Widerlager für eine Aussenfläche des zweiten Gegenstands sowie einen Durchgang aufweist, wobei der Durchgang einen zu dem ersten Lastangriffsmittel benachbarten Einführabschnitt und einen Aufspreizabschnitt aufweist, wobei der Aufspreizabschnitt eine die Aussenabmessungen des Dornes unterschreitende Verengung aufweist, wobei sich die Verengung zumindest bis zu jener Stelle des Durchgangs erstreckt, welche zu dem Widerlager am nächsten benachbart ist.

Eine bevorzugte Ausführung zeichnet sich dadurch aus, dass die Verengung den Durchgang von der dem Widerlager am nächsten benachbarten Stelle des Durchgangs zu dem zweiten Lastangriffsmittel hin zunehmend verengt. Besonders bevorzugt umfasst die Verengung einen konischen und/oder zylindrischen Abschnitt.

Eine bevorzugte Ausführung zeichnet sich dadurch aus, dass der Dorn frei beweglich in den Einführabschnitt einführbar ist.

Eine bevorzugte Ausführung zeichnet sich dadurch aus, dass die Hülse ein zu dem Aufspreizabschnitt benachbartes zweites Lastangriffsmittel für den zweiten Gegenstand aufweist.

Eine bevorzugte Ausführung zeichnet sich dadurch aus, dass die Vorrichtung ein Dichtelement für eine Abdichtung zwischen der Hülse und dem zweiten Gegenstand aufweist. Besonders bevorzugt ist das Dichtelement als O-Ring oder Kunststoffformteil ausgebildet.

Eine bevorzugte Ausführung zeichnet sich dadurch aus, dass das erste Lastangriffsmittel ein Halteelement umfasst, welches insbesondere form- und/oder materialschlüssig an der Hülse angebracht ist. Besonders bevorzugt ist das Halteelement gegenüber der Hülse um eine Achse frei drehbar angeordnet und weist senkrecht zu der Achse einen asymmetrischen Querschnitt auf.

Die Aufgabe wird ebenfalls gelöst durch ein Verfahren zur Befestigung eines ersten Gegenstandes an einem zweiten Gegenstand, bei dem a) der zweite Gegenstand mit einer Aussparung versehen wird, b) eine Hülse mit einem ersten Lastangriffsmittel für den ersten Gegenstand, einem Widerlager für eine Aussenfläche des zweiten Gegenstands und einem Durchgang in die Aussparung eingeführt wird, wobei der Durchgang einen zu dem ersten Lastangriffsmittel benachbarten Einführabschnitt und einen Aufspreizabschnitt aufweist, c) ein Dorn in den Einführabschnitt eingeführt wird, wobei der Aufspreizabschnitt eine die Aussenabmessungen des Dornes unterschreitende Verengung aufweist, und d) der Dorn in den Aufspreizabschnitt getrieben wird, so dass der in die Aussparung eingeführte Bereich der Hülse gegen die Aussparung aufgespreizt wird. Insbesondere wird der Verfahrensschritt d) mit demselben Werkzeug durchgeführt, mit dem zuvor bereits der Verfahrensschritt a) durchgeführt wurde.

Die Aufgabe wird ebenfalls gelöst durch eine Vorrichtung zur Erzeugung von Schlägen auf ein Befestigungselement, mit einem Abstützmittel zur drehfesten Abstützung der Vorrichtung an einem Gehäuse einer Bohrmaschine, einem Abgreifmittel zum Abgreifen einer Drehbewegung eines drehend angetriebenen Drehelementes der Bohrmaschine, einem Schlagelement zur Übertragung von Schlägen auf das Befestigungselement, und einem Schlagwerk zur Umwandlung einer Drehbewegung des Abgreifmittels in eine Linearbewegung des Schlagelementes. Bevorzugt weist die Vorrichtung eine Aufnahme für das Befestigungselement auf.

Eine bevorzugte Ausführung zeichnet sich dadurch aus, dass die Vorrichtung ein besonders bevorzugt untersetzendes Getriebe aufweist, welches antriebseitig mit dem Abgreifmittel und abtriebseitig mit dem Schlagwerk verbunden ist.

Eine bevorzugte Ausführung zeichnet sich dadurch aus, dass das Schlagwerk ein Krafterkennungsmittel zur Erkennung einer Anpresskraft des Befestigungselementes an einen Untergrund und Kupplungsmittel aufweist, welche den Kraftfluss vom Abgreifmittel zum Schlagelement unterbrechen, solange die Anpresskraft des Befestigungselementes an den Untergrund kleiner ist als eine vorbestimmte Kraft, und welche den Kraftfluss vom Abgreifmittel zum Schlagelement schliessen, wenn die Anpresskraft des Befestigungselementes an den Untergrund mindestens so gross ist wie die vorbestimmte Kraft.

### Ausführungsbeispiele

Die Erfindung wird nachstehend anhand von Ausführungsbeispielen unter Bezugnahme auf die Zeichnungen näher erläutert. Es zeigen:
Fig.1 eine Befestigungsvorrichtung im Querschnitt,
Fig. 2 ausschnittsweise eine Befestigungsvorrichtung im Querschnitt,
Fig. 3 eine Befestigungsvorrichtung,
Fig. 4 ein Hilfswerkzeug,
Fig. 5 eine Befestigungsvorrichtung,
Fig. 6 eine Befestigungsvorrichtung und ein Hilfswerkzeug,
Fig. 7 eine Befestigungsvorrichtung im Querschnitt,
Fig. 8 eine Befestigungsvorrichtung,
Fig. 9 eine Befestigungsvorrichtung im Querschnitt,
Fig. 10 eine Befestigungsvorrichtung,
Fig. 11 eine Schlagvorrichtung im Querschnitt und
Fig. 12 eine Schlagvorrichtung im Querschnitt.

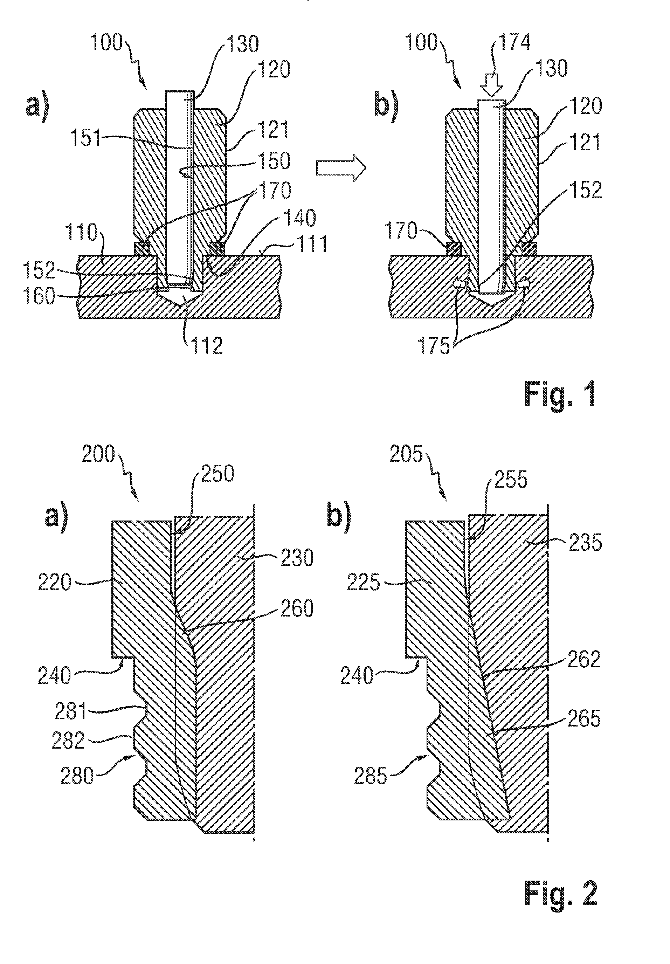

In Fig.1 ist eine Befestigungsvorrichtung 100 zur Befestigung eines nicht gezeigten ersten Gegenstandes an einem zweiten Gegenstand 110 dargestellt. Die Befestigungsvorrichtung 100 weist eine Hülse 120 und einem Dorn 130 auf, wobei die Hülse ein erstes Lastangriffsmittel 121 für den ersten Gegenstand und ein Widerlager 140 für eine Aussenfläche 111 des zweiten Gegenstands sowie einen Durchgang 150 aufweist, wobei der Durchgang 150 einen zu dem ersten Lastangriffsmittel 121 benachbarten Einführabschnitt 151 und einen Aufspreizabschnitt 152 aufweist, wobei der Aufspreizabschnitt 152 eine die Aussenabmessungen des Dornes unterschreitende Verengung 160 aufweist. Der Dorn 130 ist frei beweglich in den Einführabschnitt einführbar. Ein Dichtelement 170 ist für eine Abdichtung zwischen der Hülse 120 und dem zweiten Gegenstand 110 vorgesehen, um das Bohrloch 112 in dem zweiten Gegenstand 110 vor eindringenden Medien und somit insbesondere vor Korrosion zu schützen.

Ein Verfahren zur Befestigung des nicht gezeigten ersten Gegenstandes an dem zweiten Gegenstand 110 sieht vor, dass zunächst der zweite Gegenstand 110 mit dem Bohrloch 112 versehen wird. Danach wird die Hülse 120 in das Bohrloch 112 eingeführt. Schliesslich wird der Dorn 130 in den Einführabschnitt 151 (Fig. 1a) und anschliessend entlang dem Pfeil 174 in den Aufspreizabschnitt 152 getrieben (Fig. 1b). Gemäss einer besonders bevorzugten Ausgestaltung wird die Befestigungsvorrichtung bereits mit in dem Einführabschnitt vormontiertem Dorn ausgeliefert. Während des Eintreibvorgangs wird der in das Bohrloch 112 eingeführte Bereich der Hülse 120 in Richtung der Pfeile 175 gegen das Bohrloch aufgespreizt.

In Fig. 2a ist eine Hülse 220 einer Befestigungsvorrichtung 200 ausschnittsweise dargestellt, bei der sich die Verengung 260 über jene Stelle des Durchgangs 250 hinaus erstreckt, welche zu dem Widerlager 240 am nächsten benachbart ist. Hierdurch wird das gesamte Bohrloch in dem zweiten Gegenstand, insbesondere auch die oberflächennahe Wandung des Bohrlochs, für eine Verpressung genutzt. Weiterhin weist die Hülse 220 ein zu dem Aufspreizabschnitt benachbartes zweites Lastangriffsmittel 280 für den zweiten Gegenstand auf. Das Lastangriffsmittel 280 umfasst Rillen 281 und dazwischen liegende, bevorzugt umlaufende und insbesondere abgeflachte Vorsprünge 282 für eine verbesserte Klemmwirkung und/oder formschlüssige Befestigung der Hülse 220 in dem Bohrloch. Die Verengung 260 verengt den Durchgang 250 von der dem Widerlager 240 am nächsten benachbarten Stelle des Durchgangs 250 zu dem zweiten Lastangriffsmittel 280 hin zunehmend und weist einen zylindrischen Abschnitt 261 auf. Ein Dorn 230 ist in seiner Endposition gezeigt, so dass deutlich wird, dass die Verengung 260 mit ihren Innenabmessungen die Aussenabmessungen des Dornes 230 unterschreitet.

In Fig. 2b ist eine Hülse 225 einer Befestigungsvorrichtung 205 ausschnittsweise dargestellt, bei der sich die Verengung 265 über jene Stelle des Durchgangs 255 hinaus erstreckt, welche zu dem Widerlager 245 am nächsten benachbart ist. Weiterhin weist die Hülse 225 ein zu dem Aufspreizabschnitt benachbartes zweites Lastangriffsmittel 285 für den zweiten Gegenstand auf. Die Verengung 265 verengt den Durchgang 255 von der dem Widerlager 245 am nächsten benachbarten Stelle des Durchgangs 255 zu dem zweiten Lastangriffsmittel 285 hin zunehmend und weist einen konischen Abschnitt 262 auf. Ein Dorn 235 ist in seiner Endposition gezeigt, so dass deutlich wird, dass die Verengung 265 mit ihren Innenabmessungen die Aussenabmessungen des Dornes 235 unterschreitet.

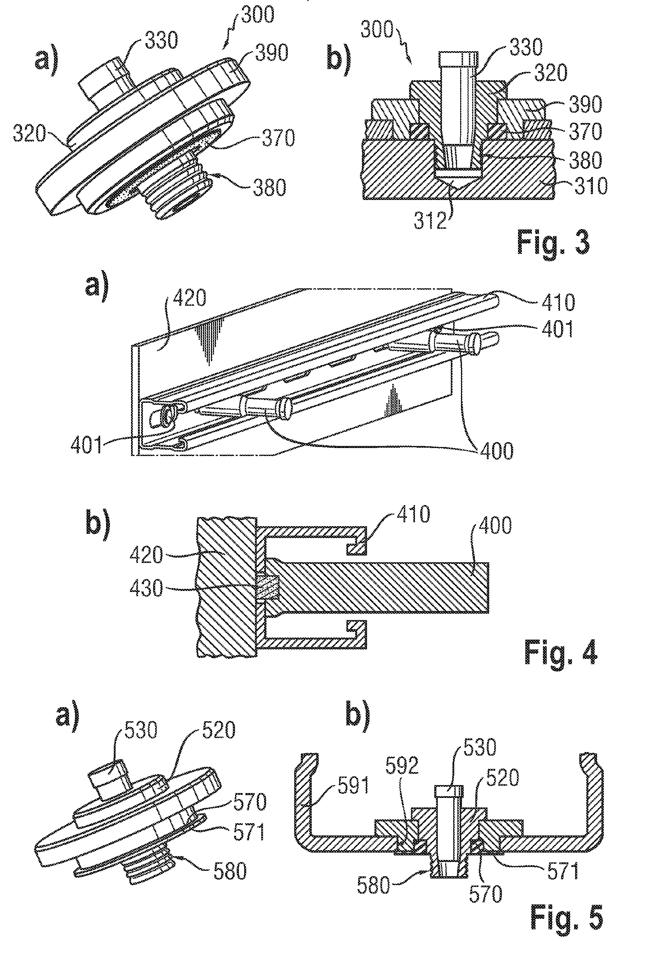

In Fig. 3 ist eine Befestigungsvorrichtung 300 dargestellt. Neben einer Hülse 320, einem Dorn 330, einem Dichtelement 370 und einem zweiten Lastangriffsmittel 380 für eine Verankerung in einem Bohrloch 312 in dem zweiten Gegenstand 310 weist die Befestigungsvorrichtung 300 ein Halteelement 390 auf. Das Halteelement 390 ist an einem Absatz 321 der Hülse 320 abgestützt und somit formschlüssig an der Hülse 320 angebracht.

In Fig. 4 ist ein Hilfswerkzeug 400 dargestellt, mit dessen Hilfe eine Schiene 410 vorübergehend an einem Untergrund 420 gehalten wird. Ein oder mehrere Längsschlitze der Schiene 410 werden dazu an zuvor erzeugten Bohrlöchern ausgerichtet und mit den Hilfswerkzeugen 400 gehalten. Für eine Anwendung auf Stahl oder anderen ferromagnetischen Untergründen weist das Hilfswerkzeug 400 hierzu einen Magneten 430 auf. Anschliessend werden Befestigungsvorrichtungen 401 in den Bohrlöchern verankert und die Hilfswerkzeuge wieder abgenommen.

In Fig. 5 ist eine Befestigungsvorrichtung 500 dargestellt. Neben einer Hülse 520, einem Dorn 530 und einem zweiten Lastangriffsmittel 580 weist die Befestigungsvorrichtung 500 ein Dichtelement 570 auf, welches eine umlaufende Lippe 571 aufweist. Die Lippe 571 dient zunächst einer formschlüssigen Halterung der Befestigungsvorrichtung 500 in einem Loch oder Schlitz 592 eines Befestigungselementes, beispielsweise einer Schiene 591. Das Befestigungselement 500 wird hierzu schräg in den Schlitz 592 derart eingeschoben, dass die Lippe 571 in den Schlitz 592 einschnappt. Das Befestigungselement 500 lässt sich dann noch bevorzugt längs des Schlitzes 592 verschieben. Anschliessend wird das Befestigungselement 500 mit der vormontierten Schiene 591 in eine vorgebohrte Sacklochbohrung im Untergrund gesteckt. Danach wird der Dorn 530 eingetrieben, so dass die Hülse 520 radial verspreizt und somit die Schiene 591 befestigt ist. Die Lippe 571 wirkt nun als Abdichtung zwischen der Schiene 591 und dem Untergrund, neben der Dichtwirkung des Dichtelementes 570 zwischen dem Untergrund und der Hülse 520.

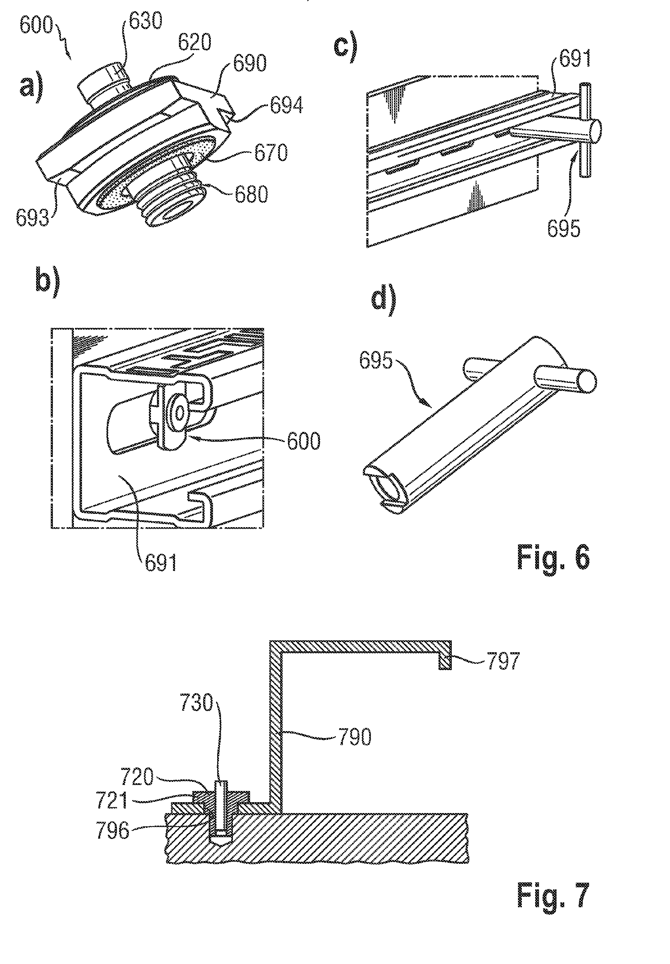

In Fig. 6 ist eine Befestigungsvorrichtung 600 dargestellt. Neben einer Hülse 620, einem Dorn 630, einem Dichtelement 670 und einem zweiten Lastangriffsmittel 680 weist die Befestigungsvorrichtung 600 ein Halteelement 690 auf. Das Halteelement 690 ist an einem nicht gezeigten Absatz der Hülse 620 frei drehbar abgestützt und somit formschlüssig an der Hülse 620 angeordnet. Das Halteelement 690 weist senkrecht zu einer Längsachse der Hülse 620 einen asymmetrischen Querschnitt auf. Insbesondere weist das Halteelement 690 zwei Niederhalter 693, 694 auf, welche in zwei entgegen gesetzten Richtungen senkrecht zur Längsachse der Hülse 620 von dem Halteelement abragen.

Das Befestigungselement 600 wird zunächst im Untergrund verankert. Danach wird eine Schiene 691 mit einem Längsschlitz zu den Niederhaltern 693, 694 ausgerichtet und in das Befestigungselement 600 eingefädelt. Mit einem Hilfswerkzeug 695, beispielsweise einem Gabel- oder Steckschlüssel) wird das Halteelement 690 um etwa 90° verdreht, so dass die Schiene 691 mit Hilfe der Niederhalter 693, 694 formschlüssig am Untergrund befestigt ist. Um ein Zurückdrehen der Niederhalter 693, 694 zu verhindern, ist besonders bevorzugt eine Verrastung zwischen dem Befestigungselement 600 und der Schiene 691 vorgesehen. Die Verrastung umfasst beispielsweise eine Nase am Befestigungselement und eine Nut in der Schiene.

In Fig. 7 ist eine Befestigungsvorrichtung 700 dargestellt, welche eine Hülse 720, einen Dorn 730 und ein Halteelement 790 aufweist. Das Halteelement 790 ist mit einem Durchbruch 796 an einem Absatz 721 der Hülse 720 abgestützt und somit formschlüssig an der Hülse 720 angebracht. Das Halteelement 790 ist bügelförmig ausgebildet und dient beispielsweise der Halterung einer nicht dargestellten Schiene, welche mittels eines Vorsprungs 797 des Halteelementes 790 an einem Herausrutschen gehindert ist.

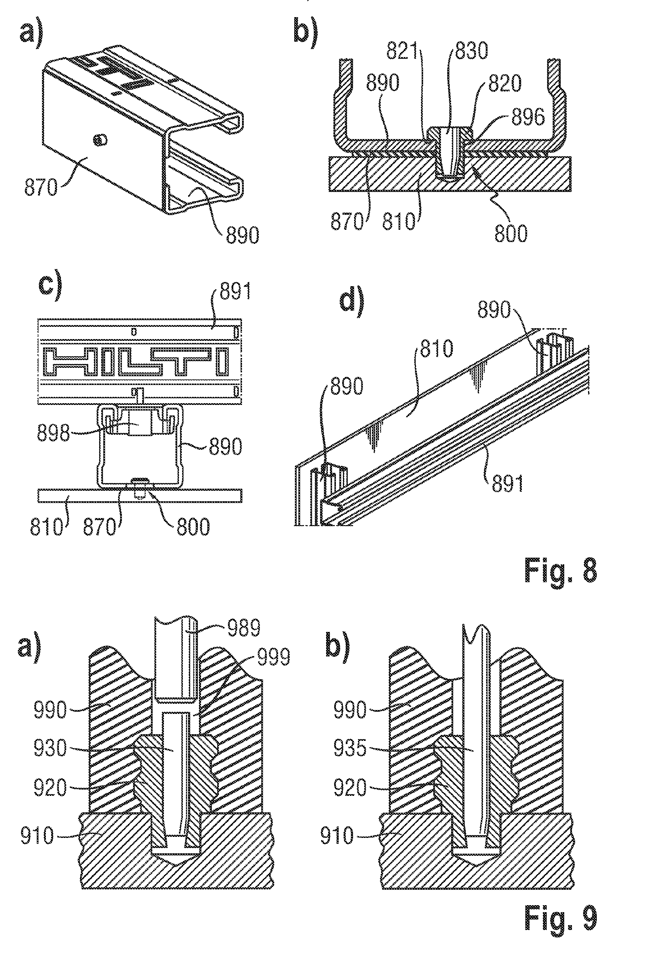

In Fig. 8 ist eine Befestigungsvorrichtung 800 dargestellt, welche eine Hülse 820, einen Dorn 830 und ein Halteelement 890 aufweist. Das Halteelement 890 ist mit einem Durchbruch 896 an einem Absatz 821 der Hülse 820 abgestützt und somit formschlüssig an der Hülse 820 angebracht. Das Halteelement 890 ist als Schiene ausgebildet und dient beispielsweise der Halterung einer weiteren Schiene 891, welche mittels eines Halters 898 an dem Halteelement 890 befestigt ist. Das Halteelement 890 weist ein Dichtelement 870 auf für eine Abdichtung zwischen dem Halteelement 890 und einem Untergrund 810 auf.

In Fig. 9 ist eine Befestigungsvorrichtung 900 im Querschnitt dargestellt, welche eine Hülse 920, einen Dorn 930 und ein Halteelement 990 zur Verankerung an einem Untergrund 910 aufweist. Das Halteelement 990 besteht aus Kunststoff und ist an die Hülse 920 angespritzt und somit materialschlüssig an der Hülse 920 angebracht. Ein Eintreiben des Dorns 930 in die Hülse 920 geschieht bei einem Halteelement, welches über die Hülse entgegen der Befestigungsrichtung hinaus steht, indem ein Eintreibwerkzeug 989 in eine Aussparung 999 des Halteelementes 990 eintaucht (Fig. 9a) oder mit Hilfe eines verlängerten Dorns 935, welcher über das Haltelement hinausragt (Fig. 9b).

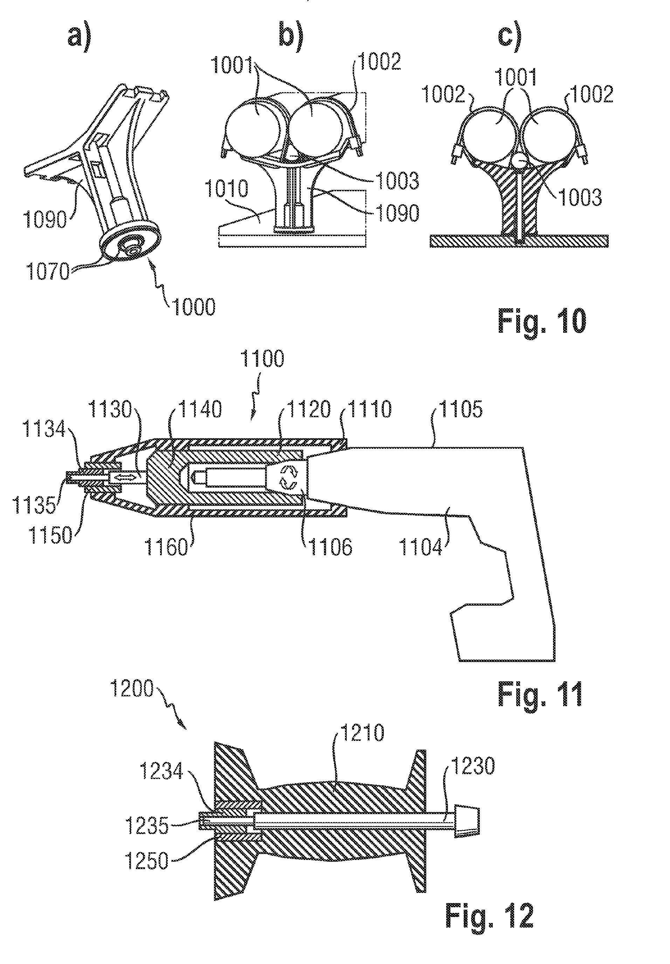

In Fig. 10 ist eine Befestigungsvorrichtung 1000 mit einem angespritzten Halteelement 1090 aus Kunststoff dargestellt. Das Halteelement 1090 dient beispielsweise der Halterung von Kabeln 1001 in einem gewünschten Abstand von einem Untergrund 1010. Hierzu weist das Haltelelement 1090 zwei Kabelbinder 1002 auf, die vorzugsweise an dem Halteelement 1090 befestigt (Fig. 10b) oder an das Halteelement 1090 angespritzt sind (Fig. 10c). Eine Haltestange 1003 dient einer Abstützung der Kabel 1001 gegen ein Durchhängen. Weiterhin weist die Befestigungsvorrichtung einen oder mehrere Dichtringe 1070 für eine Abdichtung zwischen dem Halteelement 1090 und dem Untergrund 1010 auf.

In Fig. 11 ist eine Schlagvorrichtung 1100 dargestellt. Die Schlagvorrichtung 1100 umfasst ein Abstützmittel 1110 zur drehfesten Abstützung der Schlagvorrichtung 1100 an einem Gehäuse 1105 einer Bohrmaschine 1104, ein Abgreifmittel 1120 zum Abgreifen einer Drehbewegung eines Bohrfutters 1106 der Bohrmaschine 1104, ein Schlagelement 1130 zur Übertragung von Schlägen auf einen Dorn 1135 eines Befestigungselementes 1134, und ein Schlagwerk 1140 zur Umwandlung einer Drehbewegung des Abgreifmittels 1120 in eine Linearbewegung des Schlagelementes 1130. Das Schlagwerk 1140 ist bevorzugt als Feder-Nocken-Schlagwerk ausgebildet. Weiterhin weist die Schlagvorrichtung 1100 ein Gehäuse 1160 mit einer Aufnahme 1150 für das Befestigungselement 1134 auf. Die drehfeste Abstützung der Schlagvorrichtung 110 an dem Gehäuse 1105 der Bohrmachine 1104 geschieht vorzugsweise durch einen Bajonettverschlusse zwischen dem Abstützmittel 1110 und dem Gehäuse 1105. Weiterhin umfasst die Schlagvorrichtung 1100 ein Untersetzungsgetriebe, welches antriebseitig mit dem Abgreifmittel und abtriebseitig mit dem Schlagwerk verbunden ist.

Mit Hilfe der Schlagvorrichtung 1100 wird erreicht, dass zum Bohren eines Bohrlochs und zum Eintreiben des Dorns in die Hülse eine einzige Bohrmaschine 1104 verwendet werden kann. Dazu wird zunächst die Bohrmaschine 1104, vorzugsweise ein akkubetriebener Elektrobohrer oder -schrauber ohne Schlagfunktion, mit einem Anschlagbohrer bestückt und ein Bohrloch in einem Untergrund erzeugt. Anschliessend wird die Schlagvorrichtung 1100 über den Anschlagbohrer auf die Bohrmaschine 1104 montiert, ein erfindungsgemässes Befestigungselement in die Aufnahme 1150 eingeführt und im Untergrund verankert, indem das Schlagelement 1130 den Dorn 1135 in die Hülse des Befestigungselementes 1134 eintreibt. Die Schlagenergie ist dabei nicht notwendigerweise so gross, dass der Dorn in einem einzigen Schlag eingetrieben werden kann. Bevorzugt wird der Dorn vielmehr mit mehreren, kurz aufeinander folgenden Schlägen eingetrieben. Die gewünschte Schlagfrequenz und -energie wird mit Hilfe des Untersetzungsgetriebes bestimmt.

Bevorzugt sind die Dimensionen des Schlagwerks und des Befestigungselementes so aufeinander abgestimmt, dass das Schlagelement nicht auf die Hülse schlage kann, sondern kurz davor stoppt, so dass der Dorn immer eine gewünschte Eintreibtiefe erhält, ohne dass die Hülse mechanisch belastet oder beschädigt wird.

Bei Befestigungsvorrichtungen mit Dichtelementen ist es wünschenswert, die Hülse während des Eintreibens des Dorns mit einer vorbestimmten Kraft gegen den Untergrund zu drücken. Dies wird bevorzugt dadurch bewerkstelligt, dass das Schlagwerk ein Krafterkennungsmittel zur Erkennung einer Anpresskraft des Befestigungselementes an einen Untergrund und Kupplungsmittel aufweist, welche den Kraftfluss vom Abgreifmittel zum Schlagelement unterbrechen, solange die Anpresskraft des Befestigungselementes an den Untergrund kleiner ist als eine vorbestimmte Kraft, und welche den Kraftfluss vom Abgreifmittel zum Schlagelement schliessen, wenn die Anpresskraft des Befestigungselementes an den Untergrund mindestens so gross ist wie die vorbestimmte Kraft. Somit wird die Schlagbewegung erst dann durchgeführt, wenn die Anpresskraft die vorbestimmte Kraft erreicht. Die vorbestimmte Kraft ist vorzugsweise eine solche Kraft, bei der das Dichtelement seine Dichtwirkung entfaltet.

In Fig. 12 ist eine manuelle Schlagvorrichtung 1200 mit einem Handgriff 1210, einem Schlagelement 1230 und einer Aufnahme 1250 dargestellt. In die Aufnahme 1250 ist ein Befestigungselement 1234 mit einem Dorn 1235 einführbar.

Bei nicht dargestellten Ausführungsbeispielen wird für den Eintreibvorgang des Dorns eine Schlagbohrmaschine mit ausgeschalteter Drehfunktion oder ein gas-, pulver-, druckluft- oder akkubetriebenes Setzgerät verwendet.

Die Erfindung wurde anhand von Beispielen einer Vorrichtung zur Befestigung eines ersten Gegenstandes an einem zweiten Gegenstand sowie einem Verfahren für eine solche Befestigung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässen Vorrichtungen und das erfindungsgemässe Verfahren auch für andere Zwecke geeignet sind.

## Patentansprüche

1. Vorrichtung zur Befestigung eines ersten Gegenstandes an einem zweiten Gegenstand, mit einer Hülse und einem Dorn, wobei die Hülse ein erstes Lastangriffsmittel für den ersten Gegenstand und ein Widerlager für eine Aussenfläche des zweiten Gegenstands sowie einen Durchgang aufweist, wobei der Durchgang einen zu dem ersten Lastangriffsmittel benachbarten Einführabschnitt und einen Aufspreizabschnitt aufweist, wobei der Aufspreizabschnitt eine die Aussenabmessungen des Dornes unterschreitende Verengung aufweist, wobei sich die Verengung zumindest bis zu jener Stelle des Durchgangs erstreckt, welche zu dem Widerlager am nächsten benachbart ist.

2. Vorrichtung nach Anspruch 1, wobei die Verengung den Durchgang von der dem Widerlager am nächsten benachbarten Stelle des Durchgangs zu dem zweiten Lastangriffsmittel hin zunehmend verengt.

3. Vorrichtung nach Anspruch 2, wobei die Verengung einen konischen Abschnitt umfasst.

4. Vorrichtung nach einem der vorhergehenden Ansprüche, wobei die Verengung einen zylindrischen Abschnitt umfasst.

5. Vorrichtung nach einem der vorhergehenden Ansprüche, wobei der Dorn frei beweglich in den Einführabschnitt einführbar ist.

6. Vorrichtung nach einem der vorhergehenden Ansprüche, wobei die Hülse ein zu dem Aufspreizabschnitt benachbartes zweites Lastangriffsmittel für den zweiten Gegenstand aufweist.

7. Vorrichtung nach einem der vorhergehenden Ansprüche, wobei die Vorrichtung ein Dichtelement für eine Abdichtung zwischen der Hülse und dem zweiten Gegenstand aufweist.

8. Vorrichtung nach einem der vorhergehenden Ansprüche, wobei das erste Lastangriffsmittel ein Halteelement umfasst, welches insbesondere form- und/oder materialschlüssig an der Hülse angebracht ist.

9. Vorrichtung nach Anspruch 8, wobei das Halteelement gegenüber der Hülse um eine Achse frei drehbar angeordnet ist und senkrecht zu der Achse einen asymmetrischen Querschnitt aufweist.

10. Verfahren zur Befestigung eines ersten Gegenstandes an einem zweiten Gegenstand, bei dem a) der zweite Gegenstand mit einer Aussparung versehen wird, b) eine Hülse mit einem ersten Lastangriffsmittel für den ersten Gegenstand, einem Widerlager für eine Aussenfläche des zweiten Gegenstands und einem Durchgang in die Aussparung eingeführt wird, wobei der Durchgang einen zu dem ersten Lastangriffsmittel benachbarten Einführabschnitt und einen Aufspreizabschnitt aufweist, c) ein Dorn in den Einführabschnitt eingeführt wird, wobei der Aufspreizabschnitt eine die Aussenabmessungen des Dornes unterschreitende Verengung aufweist, und d) der Dorn in den Aufspreizabschnitt getrieben wird, so dass der in die Aussparung eingeführte Bereich der Hülse gegen die Aussparung aufgespreizt wird.

11. Verfahren nach Anspruch 10, wobei die Verfahrensschritte a) und d) mit demselben Werkzeug durchgeführt werden.

12. Vorrichtung zur Erzeugung von Schlägen auf ein Befestigungselement, mit einem Abstützmittel zur drehfesten Abstützung der Vorrichtung an einem Gehäuse einer Bohrmaschine, einem Abgreifmittel zum Abgreifen einer Drehbewegung eines drehend angetriebenen Drehelementes der Bohrmaschine, einem Schlagelement zur Übertragung von Schlägen auf das Befestigungselement, und einem Schlagwerk zur Umwandlung einer Drehbewegung des Abgreifmittels in eine Linearbewegung des Schlagelementes.

13. Vorrichtung nach Anspruch 12, wobei die Vorrichtung ein insbesondere untersetzendes Getriebe aufweist, welches antriebseitig mit dem Abgreifmittel und abtriebseitig mit dem Schlagwerk verbunden ist.

14. Vorrichtung nach einem der vorhergehenden Ansprüche, wobei die Vorrichtung eine Aufnahme für das Befestigungselement aufweist.

15. Vorrichtung nach einem der vorhergehenden Ansprüche, wobei das Schlagwerk ein Krafterkennungsmittel zur Erkennung einer Anpresskraft des Befestigungselementes an einen Untergrund und Kupplungsmittel aufweist, welche den Kraftfluss vom Abgreifmittel zum Schlagelement unterbrechen, solange die Anpresskraft des Befestigungselementes an den Untergrund kleiner ist als eine vorbestimmte Kraft, und welche den Kraftfluss vom Abgreifmittel zum Schlagelement schliessen, wenn die Anpresskraft des Befestigungselementes an den Untergrund mindestens so gross ist wie die vorbestimmte Kraft.
